# EUROPEAN PATENT APPLICATION

(11) **EP 4 624 111 A1**
(43) Date of publication of application: **01.10.2025**
(21) Application number: 25166153.4
(22) Date of filing: 25.03.2025
(51) Int. Cl.: B25J 9/16, G05B 19/409

(54) **NON-TRANSITORY COMPUTER-READABLE STORAGE MEDIUM STORING PROGRAM AND COMPUTER**

(30) Priority: 28.03.2024 JP 2024053539
(71) Applicant: Seiko Epson Corporation, Tokyo 160-8801 (JP)
(72) Inventor: ADACHI, Mamoru, Suwa-shi, Nagano, 392-8502 (JP); HYOGO, Masaki, Suwa-shi, Nagano, 392-8502 (JP); NODA, Hiroki, Suwa-shi, Nagano, 392-8502 (JP); HAGIO, Masaaki, Suwa-shi, Nagano, 392-8502 (JP)
(74) Representative: MERH-IP Matias Erny Reichl Hoffmann Patentanwälte PartG mbB

(57) **Abstract**

A program causes a computer to execute: a function of displaying, on a display section, one or more types of role setting screens each for setting role information indicating a role of an I/O signal input to and output from a peripheral device related to control of a robot, the one or more types of role setting screens being configured to display identification information of the I/O signal and the role information in order to enable setting, for each I/O signal, of the role information corresponding to at least one type of a type of the peripheral device, a type of an I/O terminal for the I/O signal, and a type of the role; and a function of displaying, on the display section, an I/O confirmation screen for displaying classification information predetermined and indicating the at least one type in association with the identification information, for each I/O signal for which the identification information and the role information are set.

## Description

The present application is based on, and claims priority from JP Application Serial Number 2024-053539, filed March 28, 2024, the disclosure of which is hereby incorporated by reference herein in its entirety.

### BACKGROUND

### 1. Technical Field

The present disclosure relates to a non-transitory computer-readable storage medium storing a program and a computer.

### 2. Related Art

A robot control device transmits and receives information to and from a peripheral device by serial communication. Examples of the peripheral device include an end effector of a robot, a programmable logic controller (PLC), and a human machine interface (HMI). Hereinafter, a signal received by the robot control device is referred to as an input signal, and a signal transmitted from the robot control device is referred to as an output signal. The input signal and the output signal are collectively referred to as an input/output (I/O) signal.

On a setting screen of a robot control device in JP-A-2017-140666, a user can set what is to be controlled by which signal regarding I/O signals transmitted and received between the robot control device and a peripheral device. For example, a setting is made on the setting screen such that a first input signal is used for a command to turn on a function of a specific peripheral device. That is, a role of each I/O signal is set on the setting screen.

The inventors have developed a program having a similar function. The program developed by the inventors displays, on a setting screen of a robot control device, a screen on which a user can assign a name representing a role to each I/O signal such that the user can easily confirm the role of each I/O signal.

However, there are problems in that it takes time and effort for the user to assign the name indicating the role to each I/O signal, and the role of the I/O signal is erroneously recognized until the name is assigned.

### SUMMARY

According to a first aspect of the present disclosure, a non-transitory computer-readable storage medium storing a program is provided. The program causes a computer to execute: a function of displaying, on a display section, one or more types of role setting screens each for setting role information indicating a role of an I/O signal input to and output from a peripheral device related to control of a robot, the one or more types of role setting screens being configured to display identification information of the I/O signal and the role information in order to enable setting, for each I/O signal, of the role information corresponding to at least one type of a type of the peripheral device, a type of an I/O terminal for the I/O signal, and a type of the role; and a function of displaying, on the display section, an I/O confirmation screen for displaying classification information predetermined and indicating the at least one type in association with the identification information, for each I/O signal for which the identification information and the role information are set.

According to a second aspect of the present disclosure, a computer is provided. The computer includes a display section configured to display a screen, and a control section, the control section being configured to: cause the display section to display one or more types of role setting screens each for setting role information indicating a role of an I/O signal input to and output from a peripheral device related to control of a robot, the one or more types of role setting screens being configured to display identification information of the I/O signal and the role information in order to enable setting of, for each I/O signal, the role information corresponding to at least one type of a type of the peripheral device, a type of an I/O terminal for the I/O signal, and a type of the role; and cause the display section to display an I/O confirmation screen for displaying classification information predetermined and indicating the at least one type in association with the identification information, for each I/O signal for which the identification information and the role information are set.

### BRIEF DESCRIPTION OF THE DRAWINGS

FIG. 1 is an explanatory view illustrating a configuration of a robot system according to a first embodiment.
FIG. 2 is an explanatory view illustrating a first role setting screen.
FIG. 3 is an explanatory view illustrating a second role setting screen.
FIG. 4 is an explanatory view illustrating a first I/O confirmation screen.
FIG. 5 is an explanatory view illustrating classification information.
FIG. 6 is an explanatory view illustrating a second I/O confirmation screen.
FIG. 7 is an explanatory view illustrating a configuration of a robot system according to a third embodiment.
FIG. 8 is an explanatory view illustrating a setting screen displaying a status display region.
FIG. 9 is an explanatory view illustrating a setting screen not displaying a status display region is not displayed.

### DESCRIPTION OF EMBODIMENTS

### A. First Embodiment:

### A-1. System Configuration:

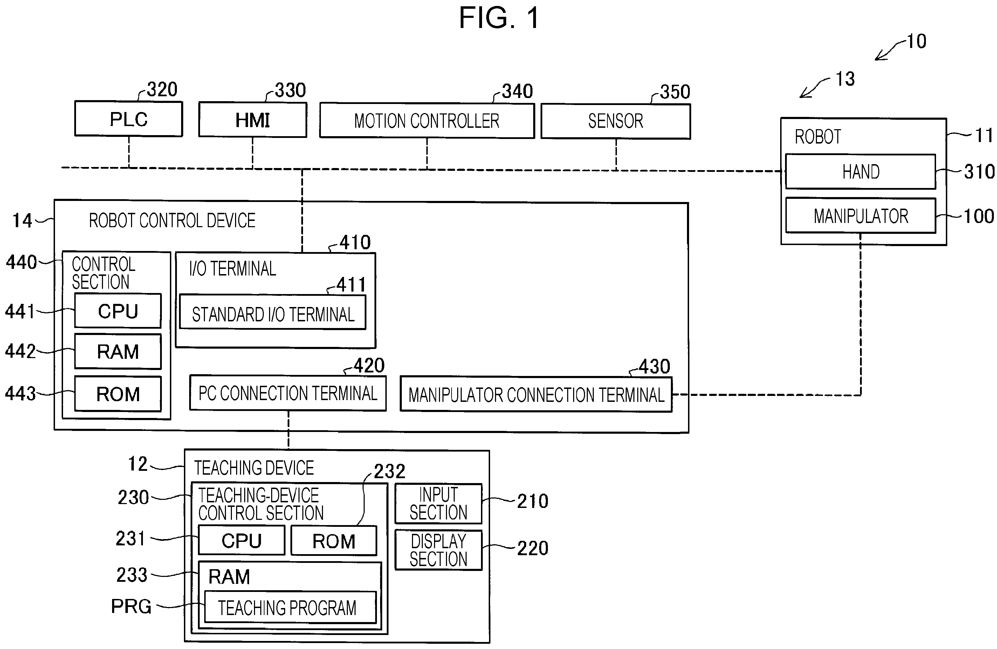

FIG. 1 is an explanatory diagram illustrating a configuration of a robot system 10 according to a first embodiment. The robot system 10 includes a robot 11, a teaching device 12, a peripheral device 13, and a robot control device 14.

The robot 11 executes a task according to teaching data created in advance. Specifically, the robot 11 is an industrial robot. That is, the robot 11 is used to manufacture a workpiece. The robot 11 includes a manipulator 100 and a hand 310. The hand 310 will be described below as the peripheral device 13.

The manipulator 100 includes a plurality of actuators. Each of the actuators functions as a joint of the manipulator 100. The actuator actuates each joint. The hand 310 is attached to a tip side of the manipulator 100. The manipulator 100 is electrically connected to the robot control device 14 via a manipulator connection terminal 430. The manipulator 100 can move the hand 310 to any position by actuating the actuator in response to an instruction from the robot control device 14.

The peripheral device 13 is used to control the robot 11. The peripheral device 13 includes a plurality of types of devices, for example, a programmable logic controller (PLC) 320, a human machine interface (HMI) 330, a motion controller 340, and a sensor 350. For example, the PLC controls the robot system 10. The HMI 330 accepts input of information from a user of the robot system 10 and displays information related to the robot system 10 to a user. For example, the motion controller 340 actuates a conveyance device of a manufacturing line so as to cooperate with the robot 11. The sensor 350 acquires information necessary for controlling the robot 11. The sensor 350 is, for example, a camera that captures an image of a workpiece on the manufacturing line. The robot 11 is controlled based on the information of the sensor 350. In other words, the peripheral device 13 includes a general-purpose device that is used without being limited to the robot control device 14.

The peripheral device 13 further includes the hand 310. The hand 310 is attached to the tip side of the manipulator 100. The hand 310 performs various tasks such as gripping a workpiece and processing the workpiece using a tool. The "hand" is also referred to as an "end effector". A specific example of the hand 310 will be described below.

The peripheral device 13 transmits and receives information to and from the robot control device 14 by serial communication. In the present specification, a signal received by the robot control device 14 is referred to as an input signal, and a signal transmitted from the robot control device 14 is referred to as an output signal. The input signal and the output signal are collectively referred to as an input/output (I/O) signal. The peripheral device 13 inputs and outputs the I/O signal via an I/O terminal 410 of the robot control device 14.

In a teaching program PRG to be described later, respective bits of the I/O signal, which is transmitted by serial communication, is represented by consecutive numbers starting from 0. To the I/O signals input to and output from the robot control device 14, the consecutive numbers are assigned to all the bits regardless of the type of the peripheral device 13 and the I/O terminal 410. Therefore, the numbers for identifying the bits are unique. The numbers for identifying the bits are referred to as "bit numbers". Further, the bit numbers are collectively referred to as "identification information".

The teaching device 12 is used to create a control program for the robot system 10 including teaching data for a task of the robot 11. The teaching device 12 includes an input section 210, a display section 220, and a teaching-device control section 230. Specifically, the teaching device 12 is a personal computer including a display, a keyboard, and a mouse. Therefore, in the present specification, the "teaching device" is also referred to as a "computer". The teaching device 12 is electrically connected to the robot control device 14 via a PC connection terminal 420.

The input section 210 accepts input of information necessary for creating a control program for the robot system 10 to the teaching-device control section 230. The input section 210 is, for example, a mouse or a keyboard. That is, the input section 210 accepts input of information to the teaching-device control section 230 by a user's operation.

The display section 220 displays a screen related to the control of the robot 11. More specifically, the display section 220 displays information related to creation of the control program for the robot system 10 in response to a command from the teaching-device control section 230. The display section 220 is, for example, a display. Accordingly, the user creates the control program for the robot system 10 by operating the input section 210 based on the information displayed by the display section 220.

The teaching-device control section 230 includes a central processing unit (CPU) 231, a read only memory (ROM) 232, and a random access memory (RAM) 233. The CPU 231 executes preset programs to perform various kinds of processing and control. The ROM 232 stores in advance programs, data, and the like necessary for the CPU 231 to execute various kinds of arithmetic processing. The RAM 233 temporarily reads and writes various kinds of date necessary for the CPU 231 to perform various kinds of arithmetic processing.

In the RAM 233, an application program for creating the control program for the robot system 10 is stored in advance. The application program for creating the control program for the robot system 10 is referred to as a "teaching program" or simply a "program". That is, the teaching program PRG is a program for the teaching device 12 including the display section 220. The teaching program PRG is installed in the teaching-device control section 230 by the user.

The teaching program PRG is used to set up the robot control device 14 including the I/O terminal 410 for an I/O signal input to and output from the peripheral device 13 related to the control of the robot 11. That is, the teaching program PRG causes the teaching device 12 to execute a function of displaying setting information necessary for the robot system 10 on the display section 220 and a function of enabling editing by the user. The setting information necessary for the robot system 10 is, for example, a program for actuating the robot 11 or position information for actuating the robot 11. In addition, the teaching program PRG causes the teaching device 12 to execute a function of assisting the task of the user by issuing a warning to the user in a case where abnormal processing or an inappropriate setting is performed. The teaching program PRG will be described in detail below.

The robot control device 14 includes the I/O terminal 410, the PC connection terminal 420, the manipulator connection terminal 430, and a control section 440.

The I/O terminal 410 is used for an I/O signal. That is, the I/O signal is input to and output from the peripheral device 13 through the I/O terminal 410. The I/O terminal 410 includes a standard I/O terminal 411 to which the peripheral device 13 is connected.

The standard I/O terminal 411 electrically connects the peripheral device 13 and the robot control device 14. Specifically, the standard I/O terminal 411 is configured by a plurality of pins. The plurality of pins in the standard I/O terminal 411 include a plurality of input pins to which input signals are input and a plurality of output pins from which output signals are output.

The PC connection terminal 420 electrically connects the teaching device 12 and the robot control device 14. Information is input and output between the teaching device 12 and the robot control device 14 via the PC connection terminal 420. For example, the PC connection terminal 420 is a universal serial bus (USB) terminal.

The manipulator connection terminal 430 electrically connects the manipulator 100 and the robot control device 14. Information is input and output between the manipulator 100 and the robot control device 14 via the manipulator connection terminal 430.

The control section 440 controls the robot system 10. The control section 440 is configured as a logic circuit centering on a microcomputer. The control section 440 includes a CPU 441, a RAM 442, and a ROM 443. The CPU 441 executes the control program for the robot system 10. The ROM 443 stores in advance programs, data, and the like necessary for the CPU 441 to execute various kinds of arithmetic processing. The RAM 442 temporarily reads and writes various kinds of date necessary for the CPU 441 to perform various kinds of arithmetic processing. The control program for the robot system 10 created by the teaching device 12 is also stored in the RAM 442.

### A-2. Function executed by Teaching Program:

As described above, the teaching program PRG is used to set up the robot control device 14 including the I/O terminal 410. The teaching program PRG causes the teaching device 12 to execute a function of displaying a plurality of types of role setting screens De10 on the display section 220 and a function of displaying an I/O confirmation screen De20 on the display section 220, in addition to the above-described functions. As a result, the role setting screen De10 and the I/O confirmation screen De20 are displayed on the display section 220.

The role setting screen De10 includes a first role setting screen De11 and a second role setting screen De12. Functions of the role setting screen De10 will be described using the first role setting screen De11 as an example.

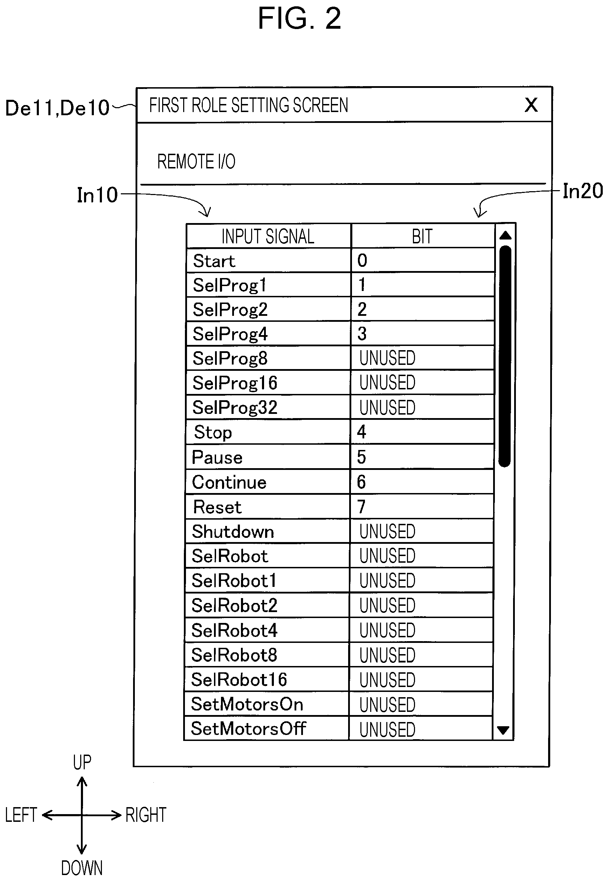

FIG. 2 is an explanatory diagram illustrating the first role setting screen De11. The role setting screen De10 displays identification information In20 and role information In10 of an I/O signal. The role information In10 indicates a role for each I/O signal input to and output from the peripheral device 13 related to the control of the robot 11. Note that "for each I/O signal" means "for each bit of the I/O signal". On the role setting screen De10, the user can set role information In10 indicating a role for each I/O signal.

The role information In10 is information indicating a function executed by rising of each bit of the I/O signal. That is, the role information In10 is information indicating the control program of the robot system 10 executed by the rising of each bit of the I/O signal. The role of the I/O signal is determined by the function performed by the control program. Types of roles of the I/O signals will be exemplified below.

The role of the I/O signal includes, for example, a function of controlling the actuating of the peripheral device 13, a function of changing the setting of the peripheral device 13, and a function of acquiring information of the peripheral device 13 or information acquired by the peripheral device 13. That is, the role of the I/O signal also includes a function of controlling the hand 310. The function of controlling the hand 310 includes, for example, a command to instruct an operation such as gripping or releasing in the case of the hand 310 that performs gripping.

Further, the role of the I/O signal includes a function of controlling the robot 11 from the peripheral device 13. The function of controlling the robot 11 from the peripheral device 13 includes, for example, a command from the PLC for actuating the robot 11, a command from the HMI by the user for actuating the robot 11, and the like. The function of remotely controlling the robot 11 in this manner is referred to as a "remote function". Furthermore, among the I/O signals, a bit used for the remote function is referred to as a "remote I/O".

As described above, the role setting screen De10 displays the identification information In20 and the role information In10 of the I/O signal. This is to enable setting of the role information In10 corresponding to the type of the peripheral device 13 and the type of the role for each I/O signal.

The first role setting screen De11 in FIG. 2 is a screen for setting the role information In10 related to the remote function for each I/O signal. The first role setting screen De11 displays the role information In10 indicating the remote function and the identification information In20. In order to facilitate understanding of the technique, the first role setting screen De11 in FIG. 2 displays only input signals among the I/O signals.

In the first role setting screen De11, the role information In10 in FIG. 2 indicates a name of the control program. For example, "Stop" is a name representing a control program that interrupts all tasks and commands in the robot system 10. For example, "Pause" is a name representing a control program that temporarily stops all tasks. In FIG. 2, the input signal of bit number 4 has the function of "Stop". The input signal of bit number 5 has the function of "Pause". For example, in the case of the setting as illustrated in FIG. 2, when the input signal of the bit number 4 rises, the control program named "Stop" is executed. Further, when the input signal of bit number 5 rises, the control program named "Pause" is executed. Therefore, the role information In10 is also information indicating assignment of a control program to be executed for each I/O signal.

Using the first role setting screen De11, the user sets the role information In10 for each I/O signal based on the identification information In20. Thus, the I/O signal set on the first role setting screen De11 has a remote function as a role. In other words, the bit numbers set on the first role setting screen De11 are classified as remote I/Os. In FIG. 2, I/O signals of bit numbers 0 to 7 are classified as remote I/Os.

The information indicating the type or the role of the peripheral device 13 is referred to as "classification information". When the role information In10 is set on the first role setting screen De11, classification information In30 indicating the type of the role, that is, the remote function, is set to the I/O signal to which the role information In10 is set.

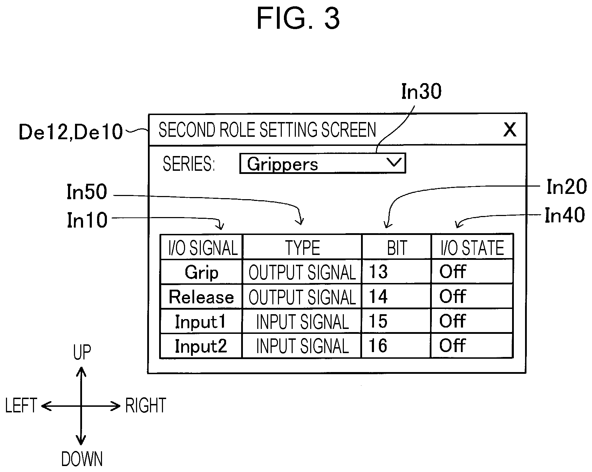

FIG. 3 is an explanatory diagram illustrating the second role setting screen De12. The second role setting screen De12 can set the role information In10 corresponding to the type of the hand 310 connected to the robot 11, among the types of the peripheral device 13. That is, the second role setting screen De12 is a screen for setting roles of the I/O signals input to and output from the hand 310. The second role setting screen De12 displays classification information In30 at the top. Further, the second role setting screen De12 displays, at the bottom, role information In10 of the I/O signal input to and output from the hand 310, type information In50 indicating an input signal or an output signal, identification information In20 of the I/O signal, and state information In40 indicating a state of inputting and outputting of the I/O signal. The state information In40 will be described below. In the present specification, the "second role setting screen" is also referred to as a "hand role setting screen".

The classification information In30 on the second role setting screen De12 indicates the type of the hand 310. The type of the hand 310 includes, for example, a type of gripping an object, a type of sucking an object, a type of fastening a screw, and a type of applying a liquid. Note that "Grippers" represents a type of gripping an object. The user sets the type of the hand 310 on the second role setting screen De12. Further, when the user sets the role information In10, the classification information In30 is set to the I/O signal to which the role information In10 is set. That is, the classification information In30 is set to the I/O signal to which the role information In10 is set.

Next, the I/O confirmation screen De20 will be described. However, in the following description, it is assumed that the hand 310 of a type of gripping an object is set as the classification information In30.

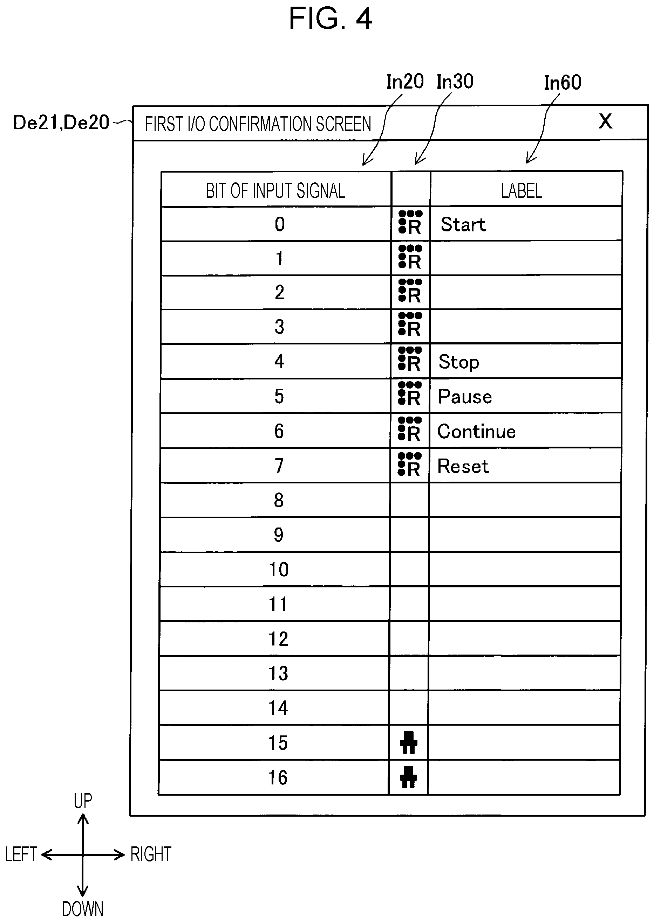

FIG. 4 is an explanatory diagram illustrating a first I/O confirmation screen De21. The I/O confirmation screen De20 includes the first I/O confirmation screen De21.

The first I/O confirmation screen De21 displays the classification information In30 in association with the identification information In20 for each I/O signal. That is, the first I/O confirmation screen De21 displays the identification information In20 and the classification information In30 in parallel in the up-down direction of the screen. More specifically, the first I/O confirmation screen De21 displays the identification information In20 and the classification information In30 in a table format. The first I/O confirmation screen De21 displays the identification information In20 and the classification information In30 separately in columns. More specifically, the first I/O confirmation screen De21 displays the pieces of information separately in a row for each bit number. On the role setting screen De10, the classification information In30 is set to the I/O signal to which the role information In10 is set. That is, the classification information In30 is set for each bit number. The first I/O confirmation screen De21 displays the classification information In30 set to the bit number of each row in one square adjacent to one square displaying the associated bit number.

The first I/O confirmation screen De21 displays the classification information In30 and the identification information In20 in a state of being adjacent to each other. The "state in which the classification information In30 and the identification information In20 are adjacent to each other" means that no other information is included between the classification information In30 and the identification information In20. With such a configuration, the program of the present embodiment makes it easy for the user to visually recognize the classification information In30 corresponding to the identification information In20.

The first I/O confirmation screen De21 further displays consecutive numbers as the identification information In20, and displays the classification information In30 arranged in the order of the numbers. With such a configuration, the teaching program PRG of the present embodiment displays the classification information In30 in a state of being arranged together with the identification information In20, and thus the user can easily visually recognize the information based on the number of the identification information In20.

In order to display the classification information In30 on the first I/O confirmation screen De21, the classification information In30 needs to be set in advance. The first I/O confirmation screen De21 in FIG. 4 shows a state of being displayed after the user sets the role information In10 on the first role setting screen De11.

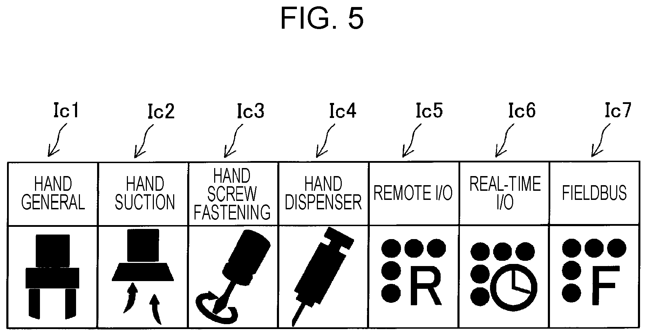

FIG. 5 is an explanatory diagram illustrating the classification information In30. The first I/O confirmation screen De21 displays an image as the classification information In30. More specifically, the first I/O confirmation screen De21 displays icons illustrated in FIG. 5 as the classification information In30.

A first icon Ic1 to a fourth icon Ic4 represent types of the hand 310. The icons represent, in the order of the first icon Ic1 to the fourth icon Ic4, types of the hand 310, respectively, for example, a type of gripping an object, a type of sucking an object, a type of fastening a screw, and a type of applying a liquid. In FIG. 5, the "type of gripping an object" is represented as "hand general", the "type of sucking an object" is represented as "hand suction", the "type of fastening a screw" is represented as "hand screw fastening", and the "type of applying a liquid" is represented as "hand dispenser". That is, the classification information In30 includes information of a plurality of types of images representing the hand 310 connected to the robot 11, among the types of the peripheral device 13. With such a configuration, the teaching program PRG of the present embodiment makes it easy for the user to visually recognize the I/O signal input to and output from the hand 310.

"Remote I/O" of the fifth icon Ic5 represents a type of role called a remote function. That is, the classification information In30 includes information of an image representing a remote function of remotely controlling the robot 11, among the types of roles. With such a configuration, the teaching program PRG of the present embodiment makes it easy for the user to visually recognize the I/O signal used for the remote function among the I/O signals.

A sixth icon Ic6 and a seventh icon Ic7 will be described in a third embodiment.

The classification information In30 is stored in the RAM 442 before the teaching program PRG is used when the teaching program PRG is installed or updated. That is, the first I/O confirmation screen De21 displays, for each I/O signal to which the identification information In20 and the role information In10 are set, predetermined classification information In30 indicating the type of the peripheral device 13 and the type of role in association with the identification information In20.

The first I/O confirmation screen De21 in FIG. 4 displays the fifth icon Ic5 in a state of being adjacent to the square displaying the bit number of the I/O signal, to which the classification information In30 indicating the remote function is set, on the first role setting screen De11. Further, the first I/O confirmation screen De21 in FIG. 4 displays the first icon Ic1 in a state of being adjacent to the square displaying the bit number of the I/O signal, to which the classification information In30 indicating the type of gripping the object among the types of the hand 310 is set, on the second role setting screen De12.

The first I/O confirmation screen De21 further displays label information In60. The label information In60 is information describing the I/O signal set by the user. On the first I/O confirmation screen De21, the user can set the label information In60 for each I/O signal. In FIG. 4, the label information In60 is input to a part of the remote I/O.

As described above, in such a configuration, as illustrated in FIG. 4, the classification information In30 is displayed on the I/O confirmation screen De20 together with the identification information In20 so as to indicate the type of the peripheral device 13 and the type of the role. The peripheral device 13 is a PLC 320, a HMI 330, the sensor 350, the hand 310, or the like. That is, the user can easily confirm any peripheral device 13 or any role, to which the I/O signal is related, based on the classification information In30 displayed on the display section 220. Therefore, the teaching program PRG of the present embodiment makes it easier for the user to infer the role of the I/O signal from the classification information In30. Accordingly, the teaching program PRG of the present embodiment can reduce time and effort for the user to input information for identifying the role for each I/O signal, compared to a form in which the classification information In30 is not displayed. Further, since the teaching program PRG of the present embodiment makes it easier for the user to infer the role of the I/O signal, it is possible to reduce the possibility that the user erroneously recognizes the role of the I/O signal.

Furthermore, as described above, the teaching program PRG of the present embodiment displays an image as the classification information In30, thereby making it easier for the user to visually recognize the classification information In30, compared to a case where the classification information In30 is displayed in a form of a character string or a symbol.

In addition, as described above, the teaching program PRG of the present embodiment displays the classification information In30 and the identification information In20 in a state of being adjacent to each other on the I/O confirmation screen De20, thereby making it easier for the user to visually recognize the classification information In30 corresponding to the identification information In20.

Further, as described above, the teaching program PRG of the present embodiment displays the classification information In30 in a state of being arranged together with the identification information In20 on the I/O confirmation screen De20, and thus the user can easily visually recognize the information based on the number of the identification information In20.

In the teaching program PRG of the present embodiment as described above, the classification information In30 includes the information of the image representing the remote function, and thus the user can easily visually recognize the I/O signal used for the remote function among the I/O signals.

Further, in the program according to the present embodiment as described above, the classification information In30 includes information of a plurality of types of images representing the hand 310, and thus the I/O signal input to and output from the hand 310 is easily visually recognized by the user.

In addition, as described above, the program of the present embodiment can easily set the role information In10 and the classification information In30 of the hand 310 by using the second role setting screen De12.

### B. Second Embodiment:

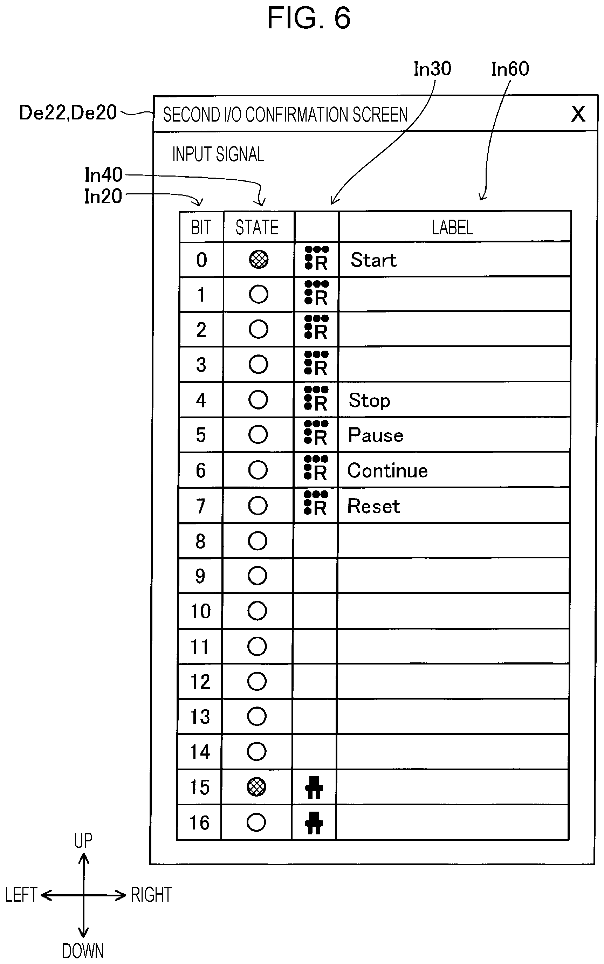

FIG. 6 is an explanatory diagram illustrating a second I/O confirmation screen De22. The I/O confirmation screen De20 may further include a second I/O confirmation screen De22. The second I/O confirmation screen De22 displays identification information In20, classification information In30, label information In60, and state information In40. The state information In40 represents an input/output state of each I/O signal. More specifically, the state information In40 indicates a rising state and a falling state of each I/O signal. The second I/O confirmation screen De22 displays the state information In40 in association with the identification information In20 for each I/O signal.

The second I/O confirmation screen De22 displays the identification information In20, the state information In40, and the classification information In30 in parallel in the up-down direction of the screen. Similarly to the first I/O confirmation screen De22, the second I/O confirmation screen De21 displays the identification information In20, the state information In40, and the classification information In30 in a table format. More specifically, the second I/O confirmation screen De22 displays the identification information In20, the state information In40, and the classification information In30 separately in columns. The second I/O confirmation screen De22 displays the pieces of information separately in a row for each bit number. The second I/O confirmation screen De22 displays the state information In40 indicating the state of the adjacent bit number, in one square adjacent to one square displaying the bit number of each row.

The second I/O confirmation screen De22 displays the state information In40 between the identification information In20 and the classification information In30 so as to be adjacent to both of them. That is, the second I/O confirmation screen De22 does not display the classification information In30 and the identification information In20 in a state of being adjacent to each other, unlike the first I/O confirmation screen De21 of the first embodiment.

The second I/O confirmation screen De22 illustrated in FIG. 6 displays only the state information In40 related to the input signal for easy understanding of the technique. In FIG. 6, a hatched circle represents a state in which an I/O signal is being input. Further, a non-hatched circle represents a state in which no I/O signal is being input. For example, FIG. 6 illustrates a state in which I/O signals are input to bit number 0 and bit number 15.

With such a configuration, the program of the present embodiment allows the user to easily visually recognize the input/output state of the I/O signal with respect to the peripheral device 13 or the I/O terminal 410.

### C. Third Embodiment:

In the above embodiments, the classification information In30 is information indicating the type of the peripheral device 13 and the type of the role. However, the classification information In30 may be information indicating the type of the I/O terminal 410. That is, the classification information In30 may be information indicating the type of the peripheral device 13, the type of the role, and the type of the I/O terminal 410.

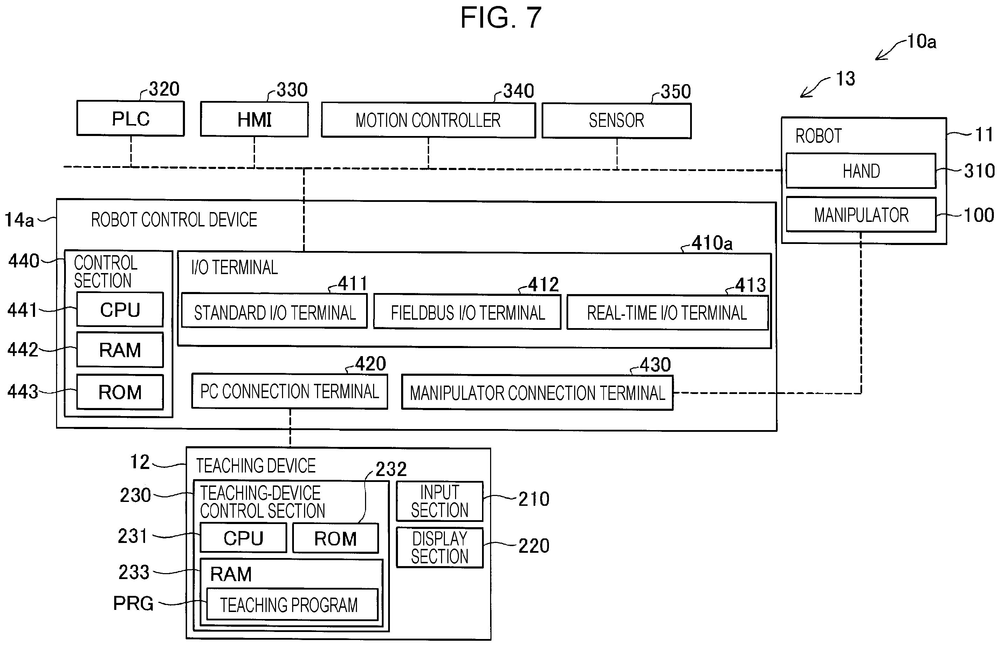

FIG. 7 is an explanatory diagram illustrating a configuration of a robot system 10a according to a third embodiment. An I/O terminal 410a of the third embodiment further includes a plurality of types of terminals, for example, a fieldbus I/O terminal 412 and a real-time I/O terminal 413 in addition to the standard I/O terminal 411. Other components of the robot system 10a of the third embodiment are the same as the components of the robot system 10 of the first embodiment. In the components of the robot system 10a of the third embodiment, components different from the components of the robot system 10 of the first embodiment are designated with reference numerals followed by a suffix "a".

The real-time I/O terminal 413 electrically connects the peripheral device 13 and a robot control device 14a. The real-time I/O terminal 413 is specifically configured by a plurality of pins. The plurality of pins in the real-time I/O terminal 413 include a plurality of input pins to which input signals are input. A trigger signal output from the peripheral device 13 is input to the real-time I/O terminal 413. The trigger signal is used to determine a timing for acquiring a position of the robot 11 being actuated. For example, the trigger signal is used to synchronize a camera of the peripheral device 13 with the robot 11. More specifically, the trigger signal is used to match the position of the robot 11 in the image of the camera with the position information acquired from the robot 11.

The fieldbus I/O terminal 412 is used for a fieldbus. That is, the fieldbus I/O terminal 412 is a terminal to which a cable for connecting the robot control device 14a to a field network is connected. The fieldbus I/O terminal 412 is designed to correspond to a wiring system and a communication protocol of the field network. For example, the fieldbus I/O terminal 412 may correspond to DeviceNet (registered trademark), PROFIBUS-DP, PROFINET, CC-LINK (registered trademark), and the like.

In the teaching program PRG, even when there are a plurality of types of I/O terminals 410a, consecutive numbers are assigned to all bits of the I/O signals input to and output from the robot control device 410a irrespective of the type of the I/O terminal 14a.

As illustrated in FIG. 5, the classification information In30 indicating the real-time I/O terminal 413 and the fieldbus I/O terminal 412 is "real-time I/O" of the sixth icon Ic6 and "fieldbus" of the seventh icon Ic7. That is, the classification information In30 includes information of one type of image representing the fieldbus I/O terminal 412 and information of one type of image representing the real-time I/O terminal 413, in the I/O terminal 410a.

The classification information In30 may include information of an image corresponding to the type of the field network. For example, the classification information In30 may include information of an image for each type, such as DeviceNet (registered trademark), PROFIBUS-DP, PROFINET, and CC-LINK (registered trademark).

The role setting screen De10 of the third embodiment displays the type of the I/O terminal 410a, for example, like the second role setting screen De12 of the first embodiment that displays the type of the hand 310. Thus, when the user sets the role information In10 for each I/O signal for each type of the I/O terminal 410a, the classification information In30 indicating the type of the I/O terminal 410a is set. The role setting screen De10 of the third embodiment is used to set the role information In10 corresponding to the type of the peripheral device 13, the type of the role, and the type of the I/O terminal 410a for each I/O signal.

With such a configuration, the program of the present embodiment makes it easier for the user to visually recognize the I/O signal input to and output from the fieldbus I/O terminal 412, the I/O signals input to and output from the standard I/O terminal 411, and the I/O signal input to and output from the real-time I/O terminal 413.

### D. Other Embodiments:

The teaching program PRG may further cause the teaching device 12 to automatically display a status display region A2. As described above, the teaching program PRG causes the teaching device 12 to execute a function of assisting the task of the user by issuing a warning to the user when abnormal processing or an inappropriate setting is performed. The function of automatically displaying the status display region A2 is included in the function of assisting the task of the user.

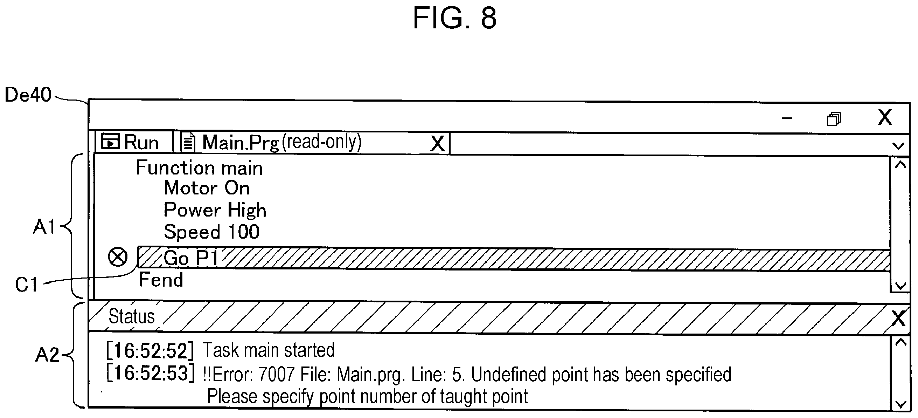

FIG. 8 is an explanatory diagram illustrating a setting screen De40 displaying the status display region A2. In the setting screen De40 illustrated in FIG. 8, a program display region A1 and a status display region A2 are displayed. The program display region A1 is, for example, a region for editing the control program of the robot system 10. The status display region A2 is a region for displaying a warning to inform the user of contents when abnormal processing or an inappropriate setting is performed. As an example of a display, the status display region A2 in FIG. 8 is in a state where an abnormality has occurred during execution of a code C1 in the control program in the program display region A1 and the contents of the abnormality are displayed. When the warning is displayed in this manner, the user can efficiently cope with the abnormality that has occurred.

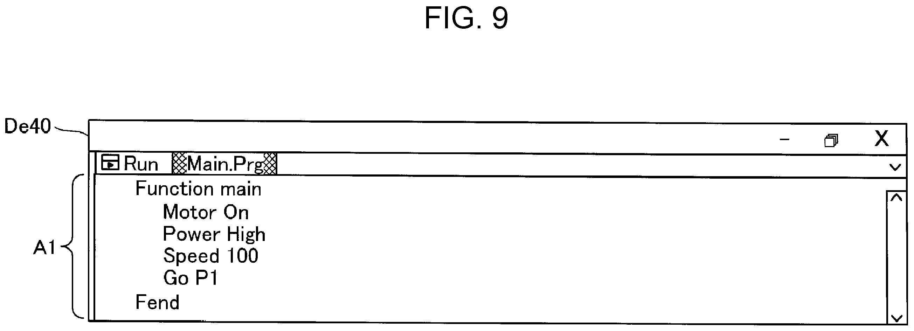

FIG. 9 is an explanatory diagram illustrating the setting screen De40 not displaying the status display region A2. The teaching program PRG can also hide the status display region A2 by the selection of the user. FIG. 9 illustrates the setting screen De40 on which the status display region A2 is not displayed.

The function of automatically displaying the status display region A2 is a function of automatically displaying the status display region A2 when abnormal processing or an inappropriate setting is performed in a state where the status display region A2 is not displayed. Thus, the teaching program PRG can reduce the possibility that the user overlooks the warning. Furthermore, the teaching program PRG can reduce time and effort for the user to display the status display region A2.

### E. Other Embodiments:

(1) In the above-described embodiment, the teaching device 12 is a personal computer having the teaching program PRG. However, the teaching device 12 may be a dedicated computer which has the teaching program PRG to teach the robot 11. More specifically, the teaching device 12 may be a teaching pendant. In this case, the teaching pendant is an example of a "computer".
(2) In the above-described embodiment, the PC connection terminal 420 is a USB terminal, but may be another type of terminal. For example, the PC connection terminal 420 may be a terminal for connecting an Ethernet cable or a terminal having a dedicated format.
(3) In the above-described embodiment, the role setting screen De10 includes the first role setting screen De11 and the second role setting screen De12, but may not include either of them. The role setting screen De10 may be only the first role setting screen De11 or only the second role setting screen De12. In addition, the role setting screen De10 may further include another role setting screen on which the classification information In30 related to other than the remote function and the hand 310 can be set. In addition, one type of the role setting screen De10 may display different types of classification information In30, such as displaying the role information In10 of the remote function and the hand 310. For example, the remote function may be selected by selecting the classification information In30 on the second role setting screen De12. That is, one or more types of role setting screens De10 may be provided.
(4) In the above-described embodiment, the I/O confirmation screen De20 displays the classification information In30 and the identification information In20 in parallel in the up-down direction of the screen. However, the direction of arrangement of the classification information In30 and the identification information In20 is not limited to the up-down direction. For example, the I/O confirmation screen De20 may display the classification information In30 and the identification information In20 in parallel in the left-right direction of the screen.
(5) In the embodiment described above, a plurality of types of hands 310 are used, but only one type of hand 310 may be used. That is, the classification information In30 may include information of one or more types of images representing the hand 310 connected to the robot 11 among the peripheral devices 13.
(6) In the above-described embodiment, the role setting screen De10 of the first embodiment allows the role information In10 corresponding to the type of the peripheral device 13 and the type of the role to be set for each I/O signal. The role setting screen De10 of the second embodiment allows the role information In10 corresponding to the type of the peripheral device 13, the type of the I/O terminal 410, and the type of the role to be set for each I/O signal. However, the role setting screen De10 may allow the role information In10 corresponding to at least one of the type of the peripheral device 13, the type of the I/O terminal 410a, and the type of the role to be set for each I/O signal. For example, the role setting screen De10 may allow the role information In10 corresponding to only the type of the role to be set for each I/O signal.
(7) In the above-described embodiment, the I/O confirmation screen De20 displays the label information In60. However, the I/O confirmation screen De20 may not display the label information In60. That is, the I/O confirmation screen De20 may display only the identification information In20 and the classification information In30, or may display only the identification information In20, the classification information In30, and the state information In40.
(8) In the above-described embodiment, the classification information In30 is displayed as an image on the display section 220. However, the classification information In30 is not limited to the image. The classification information In30 may be a symbol or a character string.
(9) In the above-described embodiment, the classification information In30 is information indicating the type of the peripheral device 13, the type of the role, and the type of the I/O terminal 410. However, the classification information In30 may be information indicating at least one of the type of the peripheral device 13, the type of the role, and the type of the I/O terminal 410. That is, the classification information In30 may be information indicating only one type of the peripheral device 13 or one type of the role.
(10) In the above-described embodiment, the identification information In20 is represented by a consecutive number. However, the identification information In20 is not limited to the consecutive number. The identification information In20 may be represented by alphabets in alphabetical order or kana characters in Japanese syllabary order, or may be represented by a combination of the consecutive number with alphabets.
(11) In the above-described embodiment, the configuration including the real-time I/O terminal 413 and the fieldbus I/O terminal 412 has been exemplified. In this case, the real-time I/O terminal 413 and the fieldbus I/O terminal 412 may be provided with fixed identification information In20 in advance. In a configuration in which the fixed identification information In20 is provided in advance, for the I/O signals corresponding to the real-time I/O terminal 413 and the fieldbus I/O terminal 412, the role information In10 corresponding to the type of the real-time I/O terminal 413 and the fieldbus I/O terminal 412 may be automatically set using the role setting screen De10 without the setting of the role information In10 by the user. That is, in the configuration in which the fixed identification information In20 is provided in advance, even if the user does not set the role information In10 using the role setting screen De10, the I/O confirmation screen De20 displays the classification information In30 in association with the fixed identification information In20 for each I/O signal.

### F. Other Aspects:

The present disclosure is not limited to the above-described embodiments, and can be implemented in various configurations without departing from the spirit of the present disclosure. For example, the technical features of the embodiments corresponding to the technical features of the aspects described in the summary of the disclosure can be replaced or combined as appropriate in order to solve some or all of the problems described above or to achieve some or all of the effects described above. Further, when the technical features are not described as essential in the present specification, the technical features can be appropriately deleted.
(1) According to a first aspect of the present disclosure, a program is provided. The program causes a computer to execute: a function of displaying, on a display section, one or more types of role setting screens each for setting role information indicating a role of an I/O signal input to and output from a peripheral device related to control of a robot, the one or more types of role setting screens being configured to display identification information of the I/O signal and the role information in order to enable setting, for each I/O signal, of the role information corresponding to at least one type of a type of the peripheral device, a type of an I/O terminal for the I/O signal, and a type of the role; and a function of displaying, on the display section, an I/O confirmation screen for displaying classification information predetermined and indicating the at least one type in association with the identification information, for each I/O signal for which the identification information and the role information are set.

In such an aspect, the classification information is displayed on the I/O confirmation screen together with the identification information so as to indicate the type of the peripheral device and the type of the role. That is, the user can easily confirm any peripheral device or any role related to the I/O signal based on the classification information displayed on the display section. Therefore, the program according to the present disclosure makes it easier for the user to infer the role of the I/O signal from the classification information. Therefore, according to the program of the present disclosure, it is possible to reduce the time and effort for the user to input the information for identifying the role for each I/O signal, compared to an aspect in which the classification information is not displayed. Further, since the program according to the present disclosure makes it easier for the user to infer the role of the I/O signal, it is possible to reduce the possibility that the user erroneously recognizes the role of the I/O signal.

(2) In the above-described aspect, the function of displaying, on the display section, the I/O confirmation screen may include displaying an image as the classification information.

With such an aspect, the program according to the present disclosure makes it easier for the user to visually recognize the classification information, compared to a case where the classification information is displayed in a form of a character string or a symbol.

(3) In the above-described aspect, the function of displaying, on the display section, the I/O confirmation screen may include displaying the classification information and the identification information in a state of being adjacent to each other.

With such an aspect, the program of the present disclosure makes it easy for the user to visually recognize the classification information corresponding to the identification information.

(4) In the above-described aspect, the function of displaying, on the display section, the I/O confirmation screen may further include displaying state information indicating an input/output state of each I/O signal in association with the identification information.

With such an aspect, the program according to the present disclosure makes it easier for the user to visually recognize the input/output state of the I/O signal with respect to the peripheral device or the I/O terminal.

(5) In the above-described aspect, the function of displaying, on the display section, the I/O confirmation screen may include displaying a consecutive number as the identification information, and arranging and displaying the classification information in order of the number.

With such an aspect, the program of the present disclosure makes it easier for the user to visually recognize the information based on the number of the identification information.

(6) In the above-described aspect, the classification information may include information on an image representing a remote function of remotely controlling the robot among the type of the role.

With such an aspect, the program according to the present disclosure makes it easier for the user to visually recognize the I/O signal used for the remote function among the I/O signals.

(7) In the above-described aspect, the classification information may include information on one or more types of images representing a hand, which is the peripheral device, connected to the robot.

With such an aspect, the program according to the present disclosure makes it easier for the user to visually recognize the I/O signal input to and output from the hand.

(8) In the above-described aspect, the I/O terminal may further include a real-time I/O terminal to which a trigger signal output from the peripheral device is input, and the classification information may include information on one or more types of images representing the real-time I/O terminal among the I/O terminal.

With such an aspect, the program according to the present disclosure makes it easier for the user to visually recognize the I/O signal input to and output from the real-time I/O terminal.

(9) In the above-described aspect, the I/O terminal may further include a fieldbus I/O terminal used for a fieldbus, and the classification information may include information on one or more types of images representing the fieldbus I/O terminal among the I/O terminal.

With such an aspect, the program of the present disclosure makes it easier for the user to visually recognize the I/O signal input to and output from the fieldbus I/O terminal.

(10) In the above-described aspect, the function of displaying, on the display section, the one or more types of role setting screens may include displaying at least a hand role setting screen on which setting of the role information is enabled according to a type of a hand, which is the peripheral device, connected to the robot.

With such an aspect, the program of the present disclosure can easily set the role information and the classification information of the hand.

(11) In the above-described aspect, the classification information may include information on one or more types of images representing a hand, which is the peripheral device, connected to the robot.

(12) According to a second aspect of the present disclosure, a computer is provided. The computer includes a display section configured to display a screen, and a control section, the control section being configured to: cause the display section to display one or more types of role setting screens each for setting role information indicating a role of an I/O signal input to and output from a peripheral device related to control of a robot, the one or more types of role setting screens being configured to display identification information of the I/O signal and the role information in order to enable setting, for each I/O signal, of the role information corresponding to at least one type of a type of the peripheral device, a type of an I/O terminal for the I/O signal, and a type of the role; and cause the display section to display an I/O confirmation screen for displaying classification information predetermined and indicating the at least one type in association with the identification information, for each I/O signal for which the identification information and the role information are set.

In such an aspect, the classification information is displayed on the I/O confirmation screen together with the identification information so as to indicate the type of the peripheral device and the type of the role. That is, the user can easily confirm any peripheral device or any role related to the I/O signal based on the classification information displayed on the display section. Therefore, the computer according to the present disclosure makes it easier for the user to infer the role of the I/O signal from the classification information. Therefore, according to the computer of the present disclosure, it is possible to reduce the time and effort for the user to input the information for identifying the role for each I/O signal, compared to an aspect in which the classification information is not displayed. Further, since the computer according to the present disclosure makes it easier for the user to infer the role of the I/O signal, it is possible to reduce the possibility that the user erroneously recognizes the role of the I/O signal.

## Claims

1. A non-transitory computer-readable storage medium storing a program, the program causing a computer to execute:
a function of displaying, on a display section, one or more types of role setting screens each for setting role information indicating a role of an I/O signal input to and output from a peripheral device related to control of a robot, the one or more types of role setting screens being configured to display identification information of the I/O signal and the role information in order to enable setting, for each I/O signal, of the role information corresponding to at least one type of a type of the peripheral device, a type of an I/O terminal for the I/O signal, and a type of the role; and
a function of displaying, on the display section, an I/O confirmation screen for displaying classification information predetermined and indicating the at least one type in association with the identification information, for each I/O signal for which the identification information and the role information are set.

2. The non-transitory computer-readable storage medium storing a program according to claim 1, wherein
the function of displaying, on the display section, the I/O confirmation screen includes displaying an image as the classification information.

3. The non-transitory computer-readable storage medium storing a program according to claim 2, wherein
the function of displaying, on the display section, the I/O confirmation screen includes displaying the classification information and the identification information in a state of being adjacent to each other.

4. The non-transitory computer-readable storage medium storing a program according to claim 2, wherein
the function of displaying, on the display section, the I/O confirmation screen further includes displaying state information indicating an input/output state of each I/O signal in association with the identification information.

5. The non-transitory computer-readable storage medium storing a program according to claim 2, wherein
the function of displaying, on the display section, the I/O confirmation screen includes displaying a consecutive number as the identification information, and arranging and displaying the classification information in order of the number.

6. The non-transitory computer-readable storage medium storing a program according to claim 2, wherein
the classification information includes information on an image representing a remote function of remotely controlling the robot among the type of the role.

7. The non-transitory computer-readable storage medium storing a program according to claim 2, wherein
the classification information includes information on one or more types of images representing a hand, which is the peripheral device, connected to the robot.

8. The non-transitory computer-readable storage medium storing a program according to claim 2, wherein
the I/O terminal further includes a real-time I/O terminal to which a trigger signal output from the peripheral device is input, and
the classification information includes information on one or more types of images representing the real-time I/O terminal among the I/O terminal.

9. The non-transitory computer-readable storage medium storing a program according to claim 2, wherein
the I/O terminal further includes a fieldbus I/O terminal used for a fieldbus, and
the classification information includes information on one or more types of images representing the fieldbus I/O terminal among the I/O terminal.

10. The non-transitory computer-readable storage medium storing a program according to claim 2, wherein
the function of displaying, on the display section, the one or more types of role setting screens includes displaying at least a hand role setting screen on which setting of the role information is enabled according to a type of a hand, which is the peripheral device, connected to the robot.

11. The non-transitory computer-readable storage medium storing a program according to claim 6, wherein
the classification information includes information on one or more types of images representing a hand, which is the peripheral device, connected to the robot.

12. A computer comprising a display section configured to display a screen; and a control section,
the control section being configured to:
cause the display section to display one or more types of role setting screens each for setting role information indicating a role of an I/O signal input to and output from a peripheral device related to control of a robot, the one or more types of role setting screens being configured to display identification information of the I/O signal and the role information in order to enable setting, for each I/O signal, of the role information corresponding to at least one type of a type of the peripheral device, a type of an I/O terminal for the I/O signal, and a type of the role; and
cause the display section to display an I/O confirmation screen for displaying classification information predetermined and indicating the at least one type in association with the identification information, for each I/O signal for which the identification information and the role information are set.
